# EUROPÄISCHE PATENTANMELDUNG

(11) **EP 4 245 401 A1**
(43) Veröffentlichungstag der Anmeldung: **20.09.2023**
(21) Anmeldenummer: 22162877.9
(22) Anmeldetag: 18.03.2022
(51) Int. Cl.: B01D 53/14, C01B 32/50, C10K 1/00

(54) **VERFAHREN UND ANLAGE ZUR ENTFERNUNG VON KOHLENDIOXID AUS SYNTHESEGAS**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Schmidt, Sophia, 60439 Frankfurt am Main (DE)
(74) Vertreter: Stang, Stefan

(57) **Zusammenfassung**

Die vorliegende Erfindung betrifft ein Verfahren zur Entfernung von Kohlendioxid aus einem zumindest Wasserstoff und Kohlendioxid aufweisenden Synthesegas, in dem das Synthesegas in einer Absorptionsvorrichtung durch physikalische Absorption bei erhöhtem Absorptionsdruck zumindest teilweise von dem Kohlendioxid befreit wird. Das Kohlendioxid wird anschließend in einer Mehrzahl in Serie geschalteter Flash-Stufen durch Druckabsenkung gegenüber dem Absorptionsdruck desorbiert und ein zumindest teilregeneriertes Absorptionsmittel wird aus der letzten der Mehrzahl in Serie geschalteter Flash-Stufen abgezogen, auf Absorptionsdruck rückverdichtet und zur Verwendung als Absorptionsmittel in die Absorptionsvorrichtung zurückgeführt. Erfindungsgemäß ist vorgesehen, dass auch ein teilregeneriertes Absorptionsmittels aus einer Flash-Stufe, welche der letzten der Mehrzahl in Serie geschalteter Flash-Stufen vorgeschaltet ist, auf Absorptionsdruck rückverdichtet wird und zur Verwendung als Absorptionsmittel in die Absorptionsvorrichtung zurückgeführt wird. Die vorliegende Erfindung betrifft auch eine Anlage mit Mitteln zur Durchführung des erfindungsgemäßen Verfahrens.

## Beschreibung

### Gebiet der Erfindung

Die Erfindung betrifft ein Verfahren zur Entfernung von Kohlendioxid (CO₂) aus Synthesegas. Die Erfindung betrifft ferner eine Anlagen zur Entfernung von Kohlendioxid (CO₂) aus Synthesegas.

### Stand der Technik

Die nachveröffentlichten europäischen Patentanmeldungen EP 20 020 521 und EP 20 020 522 beschreiben ein Verfahren zur Herstellung von Wasserstoff oder Synthesegas durch Bereitstellen von Rohsynthesegas und Abtrennung des im Rohsynthesegas anfallenden Kohlendioxids durch Absorption bei erhöhtem Druck in einem physikalisch wirkenden Absorptionsmittel, beispielsweise Methanol. Das mit Kohlendioxid beladene Absorptionsmittel wird in einer Mehrzahl hintereinander geschalteter flash-Stufen behandelt, um das Kohlendioxid aus dem Absorptionsmittel anschließend möglichst quantitativ zu desorbieren und einer darauf folgenden Lagerung unter Druck oder einer weiteren Verwendung zuzuführen.

Die Besonderheit des Verfahrens liegt unter anderem darin begründet, dass keine Heißregeneration des beladenen Absorptionsmittels erforderlich ist, das Kohlendioxid somit ausschließlich durch Druckabsenkung (Flashen) aus dem beladenen Absorptionsmittel desorbiert wird. Kohlendioxid kann jedoch durch Flashen alleine nicht bis in den Spurenbereich entfernt werden. Trotzdem ist es möglich, das Kohlendioxid nahezu quantitativ aus dem beladenen Absorptionsmittel zu desorbieren, wenn die letzte der in Serie angeordneten Flash-Stufen mit niedrigem Druck bis zu Unterdruck (Vakuum) betrieben wird, wie in EP 20 020 521 und EP 20 020 522 beschrieben. Das aus dieser letzten, vorzugsweise mit Unterdruck betriebenen Flash-Stufe abgezogene Absorptionsmittel muss anschließend wieder auf Absorptionsdruck verdichtet werden. Das gleichzeitig aus der letzten Flash-Stufe abgezogene Kohlendioxid muss auf den für die Lagerung oder weitere Verwendung erforderlichen Druck verdichtet werden. Beides erfordert in hohem Maße den Einsatz von elektrischer Energie für die dafür erforderlichen meist rotierenden Maschinen (Pumpen und Kompressoren). Um die erforderlichen Kohlendioxidabscheideraten zu erzielen, sind ferner hohe Mengen an Absorptionsmittel erforderlich. Auch dies führt zu einem hohen Stromverbrauch der Pumpen, welche das Absorptionsmittel auf Absorptionsdruck rückverdichten. Einen besonders hohen Anteil am Stromverbrauch der betreffenden Anlage hat ferner die Kompressor-Einheit, welche das desorbierte Kohlendioxid auf Atmosphärendruck oder einen höheren Druck rückverdichtet.

### Beschreibung der Erfindung

Allgemein ist es eine Aufgabe der vorliegenden Erfindung, die vorgenannten Nachteile des Standes der Technik zu überwinden.

Insbesondere besteht eine Aufgabe der vorliegenden Erfindung darin, den Stromverbrauch und damit die Betriebskosten (OPEX) des betreffenden Verfahrens und der betreffenden Anlage zu senken.

Eine weitere Aufgabe der vorliegenden Erfindung besteht darin, den Stromverbrauch des betreffenden Verfahrens und der betreffenden Anlage zu senken, ohne dabei Einbußen bei der Kohlendioxid-Absorption im Absorptionsmittel und beim Verbrauch von Kühlmittel zur Aufrechterhaltung der erforderlichen niedrigen Temperatur-Niveaus in Kauf zu nehmen.

Eine weitere Aufgabe der vorliegenden Erfindung besteht darin, die zu verdichtende Kohlendioxid-Menge zu reduzieren, um so die Investitionskosten (CAPEX) für die erforderliche Kompressor-Einheit zu reduzieren.

Eine weitere Aufgabe der vorliegenden Erfindung besteht darin, die zu verdichtende Kohlendioxid-Menge zu reduzieren, ohne dabei Einbußen bei der Kohlendioxid-Absorption im Absorptionsmittel und beim Verbrauch von Kühlmittel zur Aufrechterhaltung der erforderlichen niedrigen Temperatur-Niveaus in Kauf zu nehmen.

Ein Beitrag zur mindestens teilweisen Lösung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann. Ein allgemeine Ausführungsform der Erfindung ist gekennzeichnet durch ein Verfahren zur Entfernung von Kohlendioxid (CO₂) aus Synthesegas, wobei das Synthesegas zumindest Wasserstoff (H₂) und Kohlendioxid (CO₂) aufweist, umfassend die Schritte
(a) Bereitstellen eines physikalisch wirkenden Absorptionsmittels, insbesondere Methanol;
(b) Zuführen des Synthesegases zu einer Absorptionsvorrichtung, und Entfernen von Kohlendioxid aus dem Synthesegas durch physikalische Absorption des Kohlendioxids im Absorptionsmittel bei Absorptionsdruck in der Absorptionsvorrichtung, wobei das Absorptionsmittel und das Synthesegas in der Absorptionsvorrichtung im Gegenstrom geführt werden, und wobei ein mit zumindest Kohlendioxid beladenes Absorptionsmittel und ein zumindest teilweise von Kohlendioxid befreites Synthesegas aus der Absorptionsvorrichtung abgezogen werden;
(c) Entfernen von Kohlendioxid aus dem aus der Absorptionsvorrichtung abgezogenen beladenen Absorptionsmittel durch Desorption des Kohlendioxids in einer Mehrzahl in Serie geschalteter Flash-Stufen durch Druckabsenkung gegenüber dem Absorptionsdruck, wobei der in einer Flash-Stufe vorherrschende Druck in Flussrichtung des Absorptionsmittels von Flash-Stufe zu Flash-Stufe vermindert wird;
(d) Abziehen eines zumindest teilregenerierten Absorptionsmittels aus der letzten der Mehrzahl in Serie geschalteter Flash-Stufen, Rückverdichten des zumindest teilregenerierten Absorptionsmittels auf Absorptionsdruck und Rückführen des zumindest teilregenerierten verdichteten Absorptionsmittels zur Verwendung als Absorptionsmittel in der Absorptionsvorrichtung gemäß Schritt (b);
(e) Abziehen eines teilregenerierten Absorptionsmittels aus einer Flash-Stufe, welche der letzten der Mehrzahl in Serie geschalteter Flash-Stufen vorgeschaltet ist, Rückverdichten des teilregenerierten Absorptionsmittels auf Absorptionsdruck und Rückführen des teilregenerierten verdichteten Absorptionsmittels zur Verwendung als Absorptionsmittels in der Absorptionsvorrichtung gemäß Schritt (b).

Optional weist das Synthesegas auch Kohlenmonoxid (CO) auf.

Gemäß Schritt (b) wird ein zumindest teilweise von Kohlendioxid befreites Synthesegas aus der Absorptionsvorrichtung abgezogen. Dabei kann es sich bei diesem abgezogenen "Synthesegas" im Sinne der Erfindung auch um ein Gasgemisch handeln, welches Wasserstoff als Hauptkomponente aufweist, und lediglich geringe Mengen oder kein Kohlenmonoxid aufweist.

Erfindungsgemäß wird gemäß Schritt (e) ein teilregeneriertes Absorptionsmittel aus einer Flash-Stufe abgezogen, welche der letzten der Mehrzahl in Serie geschalteter Flash-Stufen vorgeschaltet ist. Ferner wird das teilregenerierte Absorptionsmittel erfindungsgemäß auf Absorptionsdruck rückverdichtet und das rückverdichtete teilregenerierte Absorptionsmittel zur Absorptionsvorrichtung zur erneuten Verwendung als Absorptionsmittel zurückgeführt. Ein Teil des beladenen Absorptionsmittels, welches lediglich teilregeneriert ist, wird somit nicht der letzten Flash-Stufe zugeführt, sondern in der Absorptionsvorrichtung zur Absorption von Kohlendioxid genutzt.

Es wurde überraschend gefunden, dass durch die erfindungsgemäße Verfahrensführung im Gegensatz zu einer Verfahrensführung ohne teilweise Rückführung teilregenerierten Absorptionsmittels signifikante Energieeinsparungen erzielt werden können. Diese Energieeinsparungen werden in erster Linie in Bezug auf den Stromverbrauch erzielt, jedoch auch in Bezug auf den Energieeinsatz zum Kühlen des Absorptionsmittels. Ferner wird der Verbrauch an Kühlmittel gesenkt. Da der Energieeinsatz zum Rückverdichten des Kohlendioxids insgesamt sinkt, können auch Einsparungen in Bezug auf Investitionskosten für Kompressoren erzielt werden.

Zwangsläufig weist das gemäß Schritt (d) abgezogene zumindest teilregenerierte Absorptionsmittel eine niedrigere Kohlendioxid-Konzentration auf als das gemäß Schritt (e) abgezogene teilregenerierte Absorptionsmittel. Unter Kohlendioxid-Konzentration ist dabei die Menge an Kohlendioxid zu verstehen, welche physikalisch an das Absorptionsmittel gebunden oder in diesem gelöst ist, beispielsweise in mol CO₂ pro Liter Absorptionsmittel.

Bei dem Absorptionsmittel handelt es sich vorzugsweise um Methanol. Gemäß Schritt (a) wird daher vorzugsweise Methanol als physikalisch wirkendes Absorptionsmittel bereitgestellt. Vorzugsweise wird das Kohlendioxid in der Absorptionsvorrichtung bei niedrigen Temperaturen, insbesondere tiefkalten Temperaturen, in Methanol absorbiert. Vorzugsweise weist das Methanol vor Eintritt in die Absorptionsvorrichtung eine Temperatur von weniger als -10 °C auf, oder von weniger als -20 °C auf, oder von weniger als -30 °C auf, oder von weniger als -40 °C auf. Vorzugsweise weist das Methanol vor Eintritt in die Absorptionsvorrichtung eine Temperatur von mehr als -60 °C auf, oder von mehr als -50 °C auf.

Die Absorptionsvorrichtung ist beispielsweise als Absorptionskolonne ausgestaltet und wird bei Absorptionsdruck betrieben. Bei Absorptionsdruck handelt es sich um erhöhten Druck, insbesondere einen Druck deutlich oberhalb des Umgebungsdrucks, insbesondere einen Druck von mehr als 20 bar, oder mehr als 30 bar, beispielsweise von 20 bis 80 bar, vorzugsweise 30 bis 70 bar, weiter bevorzugt 35 bis 55 bar, weiter bevorzugt 35 bis 45 bar.

Gemäß Schritt (c) wird Kohlendioxid in einer Mehrzahl in Serie geschalteter Flash-Stufen durch Druckabsenkung gegenüber dem Absorptionsdruck aus dem Absorptionsmittel wieder desorbiert. Die Flash-Stufen sind in Serie geschaltet und beispielsweise als Flash-Kolonnen oder Flash-Behälter ausgestaltet. In Serie geschaltet bedeutet insbesondere, dass die Mehrzahl an Flash-Stufen hintereinander geschaltet sind und untereinander in Fluidverbindung stehen, insbesondere zwei unmittelbar hintereinander geschaltete Flash-Stufen in Fluidverbindung stehen. Der Druck in einer Flash-Stufe ist niedriger als der Absorptionsdruck und wird von Flash-Stufe zu Flash-Stufe in Flussrichtung des Absorptionsmittels vermindert. Der Druck in einer nachgeschalteten Flash-Stufe ist also grundsätzlich niedriger als der Druck in der dieser Flash-Stufe vorgeschalteten Flash-Stufe.

Gemäß Schritt (e) wird ein teilregeneriertes Absorptionsmittel aus einer Flash-Stufe abgezogen, welche der letzten der Mehrzahl in Serie geschalteter Flash-Stufen vorgeschaltet ist. Weist das erfindungsgemäße Verfahren beispielsweise insgesamt vier Flash-Stufen auf, so kann das teilregenerierte Absorptionsmittel aus der ersten, zweiten, und/oder dritten Flash-Stufe abgezogen werden. Gemäß Schritt (e) kann das teilregenerierte Absorptionsmittel somit auch aus einer Mehrzahl Flash-Stufen, welche der letzten der Mehrzahl in Serie geschalteter Flash-Stufen vorgeschaltet sind, abgezogen werden. Vorzugsweise wird das teilregenerierte Absorptionsmittel nicht aus der ersten der Mehrzahl in Serie geschalteter Flash-Stufen abgezogen. Vorzugsweise wird das teilregenerierte Absorptionsmittel aus einer Flash-Stufe abgezogen, welche der letzten der Mehrzahl in Serie geschalteter Flash-Stufen unmittelbar vorgeschaltet ist. Weist das erfindungsgemäße Verfahren beispielsweise vier Flash-Stufen auf, wird gemäß Schritt (e) das teilregenerierte Absorptionsmittel vorzugsweise aus der dritten Flash-Stufe abgezogen. Weist das erfindungsgemäße Verfahren beispielsweise drei Flash-Stufen auf, wird gemäß Schritt (e) das teilregenerierte Absorptionsmittel vorzugsweise aus der zweiten Flash-Stufe abgezogen.

Das zumindest teilregenerierte Absorptionsmittel gemäß Schritt (d), welches aus der letzten der Mehrzahl in Serie geschalteter Flash-Stufen abgezogen wird, ist entweder teilweise regeneriert oder vollständig regeneriert. "Vollständig regeneriert" bedeutet in diesem Zusammenhang, dass das Absorptionsmittel nicht mehr oder nur noch unwesentlich mit Kohlendioxid beladen ist. Gemäß einem Beispiel weist ein solches vollständig regeneriertes Absorptionsmittel eine Kohlendioxid-Konzentration von 0 % bis 2 % gegenüber einer ursprünglich in der Absorptionsvorrichtung im Absorptionsmittel erreichten Kohlendioxidkonzentration auf. Das gemäß Schritt (e) teilregenerierte Absorptionsmittel weist entsprechend eine höhere Kohlendioxid-Konzentration auf als das gemäß Schritt (d) zumindest teilregenerierte Absorptionsmittel. Gemäß einem Beispiel weist ein Gemäß Schritt (e) teilregeneriertes Absorptionsmittel eine Kohlendioxid-Konzentration von 3 % bis 10 % gegenüber einer ursprünglich in der Absorptionsvorrichtung im Absorptionsmittel erreichten Kohlendioxidkonzentration auf.

Das der Absorptionsvorrichtung zugeführte Synthesegas wird durch dem Fachmann bekannte Verfahren erzeugt. Beispiele sind Dampfreformierung (SMR), autotherme Reformierung (ATR), gasbeheizte Reformierung (GHR) und Kombinationen aus den vorgenannten. Diese Verfahren erzeugen eine Synthesegas, welches zumindest die Bestandteile Wasserstoff (H₂), Kohlenmonoxid (CO) und Kohlendioxid (CO₂) aufweist. Vorzugweise handelt es sich bei dem Verfahren zur Synthesegaserzeugung um autotherme Reformierung. Autotherme Reformierung wird in der Regel für die Herstellung von Synthesegas gewählt, wenn besonders hohe Gaskapazitäten gefordert sind. In solchen Fällen ist die Entfernung des Kohlendioxids durch physikalische Absorption wirtschaftlich oft sinnvoller als ein Verfahren zur chemischen Absorption des Kohlendioxids, beispielsweise eine Aminwäsche. Vorzugsweise wird das primär erzeugte Synthesegas in einem Folgeschritt einer Wassergas-Shift-Reaktion unterzogen, um die Ausbeute an Wasserstoff zu erhöhen. Durch die Umsetzung des Kohlenmonoxid zu Kohlendioxid im Zuge der Wassergas-Shift-Reaktion enthält das der Absorptionsvorrichtung zugeführte Synthesegas Wasserstoff und Kohlendioxid als Hauptkomponenten. Durch die Abtrennung des Kohlendioxid aus dem Synthesegas im Zuge des erfindungsgemäßen Verfahrens wird in diesem Fall gemäß Schritt (a) vorzugsweise ein Synthesegas aus der Absorptionsvorrichtung abgezogen, welches Wasserstoff als Hauptbestandteil aufweist. Dieses Rohwasserstoffprodukt kann zur weiteren Aufarbeitung zur Gewinnung von reinem Wasserstoff beispielsweise einem Druckwechsel-Adsorptionsverfahren (PSA) zugeführt werden.

Eine Ausführungsform des erfindungsgemäßen Verfahrens ist dadurch gekennzeichnet, dass der Anteil des teilregenerierten Absorptionsmittels, welches gemäß Schritt (e) abgezogen und zu Schritt (b) zurückgeführt wird, 10 % bis 50 % der Gesamtmenge des im Verfahren verwendeten Absorptionsmittels beträgt, vorzugsweise 20 % bis 40 % der Gesamtmenge des im Verfahren verwendeten Absorptionsmittels beträgt.

Eine Ausführungsform des erfindungsgemäßen Verfahrens ist dadurch gekennzeichnet, dass der in der letzten der Mehrzahl in Serie geschalteter Flash-Stufen vorherrschende Druck Unterdruck entspricht.

Vorzugsweise wird die letzte der in Serie geschalteten Flash-Stufen mit Unterdruck (Vakuum) betrieben. Gemäß einem Beispiel herrscht in der letzten der in Serie geschalteten Flash-Stufen ein Druck von 0,1 bis 0,9 bar, vorzugsweise von 0,1 bis 0,5 bar, weiter bevorzugt von 0,2 bar. Mit "Unterdruck" ist dabei ein Druck gemeint, welcher niedriger ist als der Umgebungsdruck. Durch die Verwendung von Unterdruck in der letzten Flash-Stufe wird die Ausbeute an desorbiertem Kohlendioxid maximiert und die Kapazität des zumindest teilregenerierten Absorptionsmittels für die erneute Absorption von Kohlendioxid in der Absorptionsvorrichtung maximiert.

Gemäß einer weiteren Ausführungsform des erfindungsgemäßen Verfahrens entspricht der Druck in der letzten der Mehrzahl in Serie geschalteter Flash-Stufen Unterdruck und der Druck in der dieser letzten Flash-Stufe unmittelbar vorgeschalteten Flash-Stufe entspricht Unterdruck. Werden die letzten beiden Flash-Stufen mit Unterdruck betrieben, so spart dies zusätzlich Energie bei der Rückverdichtung des Kohlendioxids bei gleichbleibender Menge an abgeschiedenem Kohlendioxid, was durch entsprechende Simulationen gezeigt werden konnte.

Eine Ausführungsform des erfindungsgemäßen Verfahrens ist dadurch gekennzeichnet, dass in der letzten Flash-Stufe der Mehrzahl in Serie geschalteter Flash-Stufen desorbiertes Kohlendioxid aus besagter letzten Flash-Stufe abgezogen und auf denjenigen Druck verdichtet wird, welcher dem Druck derjenigen Flash-Stufe entspricht, welcher besagter letzten Flash-Stufe unmittelbar vorgeschaltet ist, und dass das aus der letzten Flash-Stufe abgezogene und verdichtete Kohlendioxid derjenigen Flash-Stufe zugeführt wird, welche besagter letzten Flash-Stufe unmittelbar vorgeschaltet ist.

Der Ausdruck "auf denjenigen Druck verdichtet wird, welcher dem Druck derjenigen Flash-Stufe entspricht, welcher besagter Flash-Stufe unmittelbar vorgeschaltet ist" meint in diesem Zusammenhang, dass das Kohlendioxid auf einen Druck verdichtet wird, welcher im Wesentlichen oder genau dem Druck in der in der unmittelbar vorgeschalteten Flash-Stufe entspricht. Insbesondere wird das Kohlendioxid auf einen Druck verdichtet, welcher dem Druck in der unmittelbar vorgeschalteten Flash-Stufe ± 10 % entspricht, oder ± 5 % entspricht, oder ± 3 % entspricht.

Vorzugsweise handelt es sich bei der letzten der in Serie geschalteten Flash-Stufen um eine Flash-Stufe, in welcher der Druck in dieser Flash-Stufe Unterdruck entspricht. Entsprechend kann ein Vakuum-Kompressor über seine Saugseite mit dieser Flash-Stufe verbunden werden, um Unterdruck in dieser Flash-Stufe zu erzeugen. Die Druckseite des Vakuum-Kompressors wird mit der dieser letzten Flash-Stufe unmittelbar vorgeschalteten Flash-Stufe verbunden. Der Druck auf der Druck-Seite des Vakuum-Kompressors entspricht dann dem Druck oder entspricht dann im Wesentlichen dem Druck in dieser vorgeschalteten Flash-Stufe. Dies führt zu einer vereinfachten Schaltung der einzelnen Apparate im erfindungsgemäßen Verfahren. Ferner wird das Kohlendioxid auf der Druckseite des Vakuum-Kompressors lediglich auf den minimal erforderlichen Druck komprimiert, wodurch der Bedarf an Kompressionsenergie minimiert wird.

Eine Ausführungsform des erfindungsgemäßen Verfahrens ist dadurch gekennzeichnet, dass der vorherrschende Druck in derjenigen Flash-Stufe, welche der letzten Flash-Stufe unmittelbar vorgeschaltet ist, Umgebungsdruck oder einem Druck kleiner als dem Absorptionsdruck entspricht, und dass in besagter Flash-Stufe desorbiertes Kohlendioxid aus dieser Flash-Stufe abgezogen und als Kohlendioxid-Produkt einer weiteren Verwendung unterzogen wird. Vorzugsweise handelt es sich dabei bei derjenigen Flash-Stufe, welche der letzten Flash-Stufe unmittelbar vorgeschaltet ist, nicht um die erste der in Serie geschalteten Flash-Stufen. Vorzugsweise handelt es sich dabei um die zweite Flash-Stufe bei einer Gesamtzahl von drei in Serie geschalteter Flash-Stufen.

Vorzugsweise handelt es sich bei der der letzten Flash-Stufe unmittelbar vorgeschalteten Flash-Stufe um eine Flash-Stufe, in welcher Umgebungsdruck oder moderater Überdruck herrscht. Eine solche Flash-Stufe wird auch als Niederdruck-Flash-Stufe bezeichnet. Vorzugsweise weist eine solche Niederdruck-Flash-Stufe einen Druck von 1 bis 5 bar auf, vorzugsweise von 1 bis 3 bar auf, weiter bevorzugt von 1 bis 2 bar auf, weiter bevorzugt von 1,1 bis 1,7 bar auf, weiter bevorzugt von 1,5 bar auf.

Je nach dem in der der letzten Flash-Stufe unmittelbar vorgeschalteten Flash-Stufe herrschenden Druck kann das aus dieser Flash-Stufe abgezogene Kohlendioxid direkt einer weiteren Verwendung oder Lagerung zugeführt werden. Gegebenenfalls erfordert die weitere Verwendung oder Lagerung einen zusätzlichen Kompressionsschritt, insbesondere wenn es sich bei dieser Flash-Stufe um eine Niederdruck-Flash-Stufe handelt.

Eine Ausführungsform des erfindungsgemäßen Verfahrens ist dadurch gekennzeichnet, dass in der Absorptionsvorrichtung co-absorbiertes Wertgas, insbesondere Wasserstoff, in der ersten Flash-Stufe der Mehrzahl in Serie geschalteter Flash-Stufen desorbiert wird, und das Wertgas aus dieser ersten Flash-Stufe abgezogen und auf Absorptionsdruck rückverdichtet wird, und das rückverdichtete Wertgas dem Synthesegas zugeführt wird.

Durch diese Maßnahme wird die Ausbeute an von Kohlendioxid befreitem Synthesegas, welches gemäß Schritt (a) aus der Absorptionsvorrichtung abgezogen wird, maximiert. Bei dem von Kohlendioxid befreiten Synthesegas handelt es sich vorzugsweise um ein Rohwasserstoffprodukt.

Vorzugsweise handelt es sich bei der ersten Flash-Stufe der Mehrzahl in Serie geschalteter Flash-Stufen um eine Mitteldruck-Flash-Stufe. Eine Mitteldruck-Flash-Stufe wird beispielsweise bei einem Druck von 10 bis 25 bar betrieben, vorzugsweise 12 bis 20 bar, besonders bevorzugt 15 bar. Durch diese Druckbereiche wird sichergestellt, dass im Wesentlichen Wasserstoff in der ersten Flash-Stufe desorbiert wird, und Kohlendioxid selektiv am Absorptionsmittel physikalisch gebunden bleibt.

Alternativ handelt es sich bei einer Mitteldruck-Flash-Stufe um eine Flash-Stufe, welche bei einem Druck von 5 bis 12 bar betrieben wird, vorzugsweise bei 6 bis 10 bar, besonders bevorzugt bei 8 bar.

Eine Ausführungsform des erfindungsgemäßen Verfahrens ist dadurch gekennzeichnet, dass die Mehrzahl in Serie geschalteter Flash-Stufen zumindest drei Flash-Stufen umfasst. Vorzugsweise umfasst die Mehrzahl in Serie geschalteter Flash-Stufen drei Flash-Stufen. Alternativ und bevorzugt umfasst die Mehrzahl in Serie geschalteter Flash-Stufen vier Flash-Stufen.

Umfasst die Mehrzahl in Serie geschalteter Flash-Stufen drei Flash-Stufen, sind die drei Flash-Stufen in Flussrichtung des Absorptionsmittels vorzugsweise als Mitteldruck-Flash-Stufe, Niederdruck-Flash-Stufe und Unterdruck-Flash-Stufe ausgestaltet. Die Mitteldruck Flash-Stufe weist vorzugsweise einen Druck von 10 bis 25 bar auf, weiter bevorzugt einen Druck von 12 bis 20 bar, weiter bevorzugt von 15 bar. Die Niederdruck-Flash-Stufe weist vorzugsweise einen Druck von 1 bis 5 bar auf, weiter bevorzugt von 1 bis 3 bar, weiter bevorzugt von 1 bis 2 bar, weiter bevorzugt von 1,1 bis 1,7 bar, weiter bevorzugt von 1,5 bar. Die Unterdruck-Flash-Stufe weist vorzugsweise einen Druck von 0,1 bis 0,9 bar auf, weiter bevorzugt von 0,1 bis 0,5 bar, weiter bevorzugt von 0,2 bar.

Umfasst die Mehrzahl in Serie geschalteter Flash-Stufen vier Flash-Stufen, sind die vier Flash-Stufen in Flussrichtung des Absorptionsmittels vorzugsweise als erste Mitteldruck-Flash-Stufe, zweite Mitteldruck-Flash-Stufe, Niederdruck-Flash-Stufe und Unterdruck-Flash-Stufe ausgestaltet. Die erste Mitteldruck-Flash-Stufe weist vorzugsweise einen Druck von 10 bis 25 bar auf, weiter bevorzugt von 12 bis 20 bar, weiter bevorzugt von 15 bar. Die zweite Mitteldruck-Flash-Stufe weist vorzugsweise einen Druck von 5 bis 12 bar auf, weiter bevorzugt von 6 bis 10 bar auf, weiter bevorzugt von 8 bar. Die Niederdruck-Flash-Stufe weist vorzugsweise einen Druck von 1 bis 5 bar auf, weiter bevorzugt von 1 bis 3 bar, weiter bevorzugt von 1 bis 2 bar, weiter bevorzugt von 1,1 bis 1,7 bar, weiter bevorzugt von 1,5 bar. Die Unterdruck-Flash-Stufe weist vorzugsweise einen Druck von 0,1 bis 0,9 bar auf, weiter bevorzugt von 0,1 bis 0,5 bar, weiter bevorzugt von 0,2 bar.

Eine Ausführungsform des erfindungsgemäßen Verfahrens ist dadurch gekennzeichnet, dass die Absorptionsvorrichtung in Gasflussrichtung des Synthesegases eine Mehrzahl in Serie geschalteter Absorptionsstufen aufweist, wobei das gemäß Schritt (d) abgezogene zumindest teilregenerierte Absorptionsmittel einer der Absorptionsstufen zugeführt wird, und wobei das gemäß Schritt (e) abgezogene teilregenerierte Absorptionsmittel einer der vorgenannten Absorptionsstufe vorgeschalteten Absorptionsstufe zugeführt wird.

Im Synthesegas häufig vorhandene Verunreinigungen, wie zum Beispiel Cyanwasserstoff oder andere Sauergase, weisen in Bezug auf viele Absorptionsmittel, insbesondere Methanol, einen höheren Absorptionskoeffizienten auf als Kohlendioxid. Durch obige Maßnahme wird sichergestellt, dass das gemäß Schritt (d) abgezogene zumindest teilregenerierte Absorptionsmittel, welches eine niedrigere Kohlendioxid-Konzentration aufweist als das gemäß Schritt (e) abgezogene zumindest teilregenerierte Absorptionsmittel, in der nachgeschalteten Absorptionsstufe mit einem Synthesegasstrom in Kontakt gebracht wird, welcher vorzugsweise ausschließlich Kohlendioxid als zu entfernenden Bestandteil aufweist. Dadurch wird die Selektivität des Absorptionsprozesses verbessert und die Reinheit des gemäß Schritt (a) aus der Absorptionsvorrichtung abgezogenen Synthesegases, welches hauptsächlich Wasserstoff enthält, verbessert.

Daher und dabei ist bevorzugt, dass die Absorptionsstufe, welcher das aus Schritt (d) abgezogene zumindest teilregenerierte Absorptionsmittel zugeführt wird, die letzte Absorptionsstufe der in Serie geschalteten Absorptionsstufen der Absorptionsvorrichtung ist.

Eine Ausführungsform des erfindungsgemäßen Verfahrens ist dadurch gekennzeichnet, dass das Verfahren keinen Heißregenerationsschritt zum Regenerieren des beladenen Absorptionsmittels umfasst.

Wie bereits oben erwähnt zeichnet sich das erfindungsgemäße Verfahren dadurch aus, dass ausschließlich Druckabsenkung (Flashen) gegenüber dem Absorptionsdruck zur Desorption des Kohlendioxid verwendet wird. Insbesondere benötigt das erfindungsgemäße Verfahren keinen bei Gaswäschen zur vollständigen Regenerierung des Absorptionsmittels meist verwendeten Heißregenerationsschritt, bei dem das Absorptionsmittel zum Sieden erhitzt wird. In einem solchen Heißregenerationsschritt wirken die Absorptionsmitteldämpfe als Strippmittel.

Eine Ausführungsform des erfindungsgemäßen Verfahrens ist dadurch gekennzeichnet, dass das Verfahren kein Stripphilfsmittel zum Regenerieren des beladenen Absorptionsmittels erfordert.

Eine Verfahrensführung ohne Stripphilfsmittel zur quantitativen Desorption des Kohlendioxids aus dem Absorptionsmittel ist insbesondere dann möglich, wenn die letzte der in Serie geschalteten Flash-Stufen mit Unterdruck (Vakuum) betrieben wird. In Gaswäscheverfahren wird häufig Stickstoff als Stripphilfsmittel in den Flash-Stufen verwendet. Dies würde jedoch zu einer Verunreinigung des Kohlendioxidprodukts führen und eine nachgelagerte Gastrennung erfordern.

Vorteile und Effekte, welche für vorgenannte Verfahrensmerkmale der Erfindung beschrieben sind, gelten zumindest für technisch gleichwirkende Vorrichtungsmerkmale ebenso für die folgenden Anlagenmerkmale.

Ein allgemeine Ausführungsform der Erfindung ist gekennzeichnet durch eine Anlage zur Entfernung von Kohlendioxid (CO₂) aus Synthesegas, wobei das Synthesegas zumindest Wasserstoff (H₂) und Kohlendioxid (CO₂) aufweist, umfassend folgende miteinander in Wirkverbindung stehende Anlagenkomponenten:
(a) Mittel zum Bereitstellen eines physikalisch wirkenden Absorptionsmittels, insbesondere Methanol;
(b) Eine Absorptionsvorrichtung, und Mittel zum Zuführen des Synthesegases zur Absorptionsvorrichtung, wobei die Absorptionsvorrichtung so konfiguriert ist, dass das Kohlendioxid aus dem Synthesegas durch physikalische Absorption im Absorptionsmittel bei Absorptionsdruck entfernbar ist, und die Absorptionsvorrichtung so konfiguriert ist, dass das Absorptionsmittel und das Synthesegas in der Absorptionsvorrichtung im Gegenstrom führbar sind, und wobei die Absorptionsvorrichtung weiterhin so konfiguriert ist, dass ein mit zumindest Kohlendioxid beladenes Absorptionsmittel und ein zumindest teilweise von Kohlendioxid befreites Synthesegas aus der Absorptionsvorrichtung abziehbar sind;
(c) Mittel zum Entfernen von Kohlendioxid aus dem aus der Absorptionsvorrichtung abziehbaren beladenen Absorptionsmittel durch Desorption, wobei die Mittel zumindest eine Mehrzahl in Serie geschalteter Flash-Stufen umfassen, wobei besagte Flash-Stufen so konfiguriert sind, dass in ihnen eine Druckabsenkung gegenüber Absorptionsdruck erfolgen kann, und die Flash-Stufen weiterhin so konfiguriert sind, dass der in einer Flash-Stufe vorherrschende Druck in Flussrichtung des Absorptionsmittels von Flash-Stufe zu Flash-Stufe abnehmen kann;
(d) Mittel zum Abziehen eines zumindest teilregenerierten Absorptionsmittels aus der letzten der Mehrzahl in Serie geschalteter Flash-Stufen, Mittel zum Rückverdichten des zumindest teilregenerierten Absorptionsmittels auf Absorptionsdruck, und Mittel zum Rückführen des zumindest teilregenerierten verdichteten Absorptionsmittel zur Verwendung als Absorptionsmittel in der Absorptionsvorrichtung gemäß (b);
(e) Mittel zum Abziehen eines teilregenerierten Absorptionsmittels aus einer Flash-Stufe, welche der letzten der Mehrzahl in Serie geschalteter Flash-Stufen vorgeschaltet ist, Mittel zum Rückverdichten des teilregenerierten Absorptionsmittels auf Absorptionsdruck, und Mittel zum Rückführen des teilregenerierten verdichteten Absorptionsmittels zur Verwendung als Absorptionsmittel in der Absorptionsvorrichtung gemäß (b).

Eine Ausführungsform der erfindungsgemäßen Anlage ist dadurch gekennzeichnet, dass die Anlage Mittel zum Erzeugen von Unterdruck in der letzten der Mehrzahl in Serie geschalter Flash-Stufen umfasst.

Eine Ausführungsform der erfindungsgemäßen Anlage ist dadurch gekennzeichnet, dass die Anlage Mittel zum Abziehen und Verdichten von in der letzten Flash-Stufe der Mehrzahl in Serie geschalteter Flash-Stufen desorbierbarem Kohlendioxid umfasst, wobei die Mittel zum Verdichten so konfiguriert sind, dass der Druck auf den das desorbierbare Kohlendioxid verdichtbar ist, dem Druck derjenigen Flash-Stufe entspricht, welche besagter letzten Flash-Stufe unmittelbar vorgeschaltet ist, und wobei die Anlage Mittel zum Zuführen des aus der letzten Flash-Stufe abziehbaren und verdichtbaren Kohlendioxid zu derjenigen Flash-Stufe umfasst, welche der letzten Flash-Stufe der Mehrzahl in Serie geschalteter Flash-Stufen unmittelbar vorgeschaltet ist.

Eine Ausführungsform der erfindungsgemäßen Anlage ist dadurch gekennzeichnet, dass die Absorptionsvorrichtung in Gasflussrichtung des Synthesegases eine Mehrzahl in Serie geschalteter Absorptionsstufen aufweist, und wobei die Anlage Mittel umfasst, so dass das gemäß (d) abziehbare, zumindest teilregenerierte Absorptionsmittel einer der Absorptionsstufen zuführbar ist, und die Anlage Mittel umfasst so dass das gemäß Schritt (e) abziehbare, teilregenerierte Absorptionsmittel einer der vorgenannten Absorptionsstufe vorgeschalteten Absorptionsstufe zuführbar ist.

Eine Ausführungsform der erfindungsgemäßen Anlage ist dadurch gekennzeichnet, dass die Anlage keine Mittel zum Heißregenerieren des beladenen Absorptionsmittels umfasst.

Eine Ausführungsform der erfindungsgemäßen Anlage ist dadurch gekennzeichnet, dass die Anlage keine Mittel zum Bereitstellen eines Stripphilfsmittels zur Verwendung in den Flash-Stufen umfasst.

Zumindest eine der Aufgaben der Erfindung wird ferner zumindest teilweise gelöst durch eine Verwendung des erfindungsgemäßen Verfahrens gemäß zumindest einer Ausführungsform oder durch eine Verwendung der erfindungsgemäßen Anlage gemäß zumindest einer Ausführungsform zur Herstellung eines Wasserstoffprodukts zur Verwendung als Kraftstoff mit einem Wasserstoffgehalt von mindestens 95 mol-% und einem Kohlendioxid-Gehalt von weniger als 1 mol-%. Vorzugsweise erfolgt die Verwendung des erfindungsgemäßen Verfahrens oder der erfindungsgemäßen Anlage zur Herstellung eines Wasserstoffprodukts zur Verwendung als Kraftstoff mit einem Wasserstoffgehalt von mindestens 98 mol-%, oder mindestens 99 mol-%, und einem Kohlendioxid-Gehalt von weniger als 0,5 mol-%, oder weniger als 0,1 mol-%.

### Ausführungsbeispiel

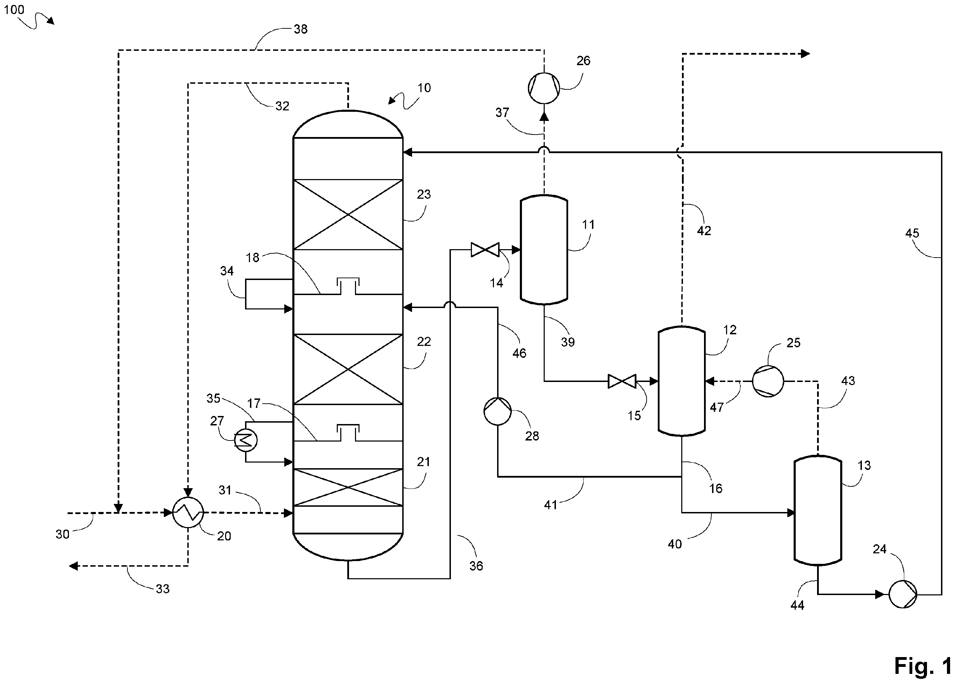

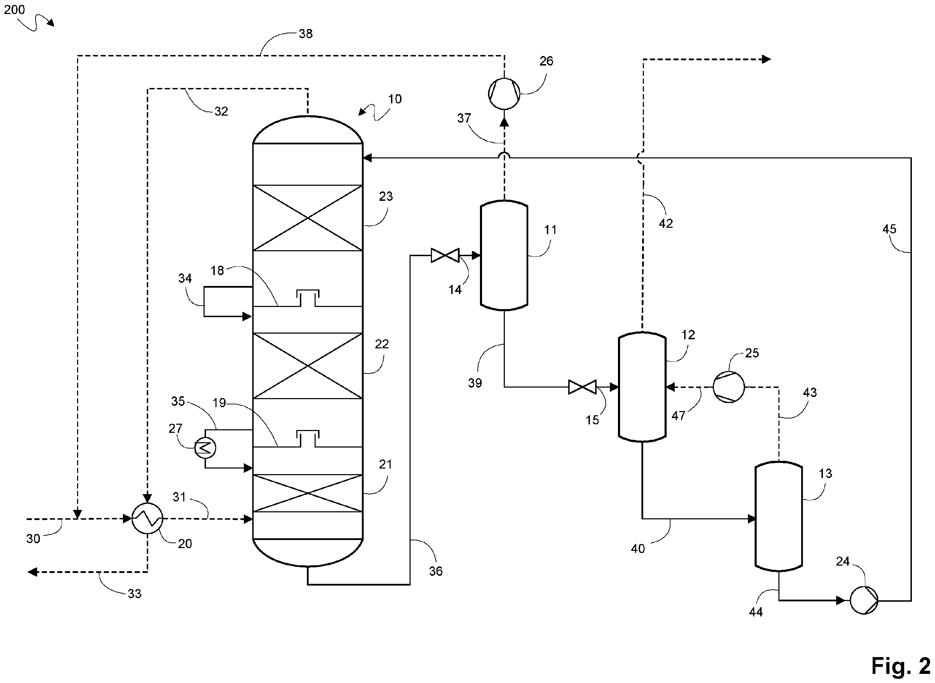

In den Figuren 1 und 2 sind gleichen Elemente mit gleichen Bezugsziffern versehen.

Figur 1 zeigt ein stark vereinfachtes Verfahrensfließbild eines Verfahrens 100 entsprechend einer möglichen Ausgestaltung der Erfindung. Absorptionsmittel ist Methanol. Gas-Ströme sind durch gestrichelte Linien dargestellt, während Flüssigkeits-Ströme durch durchgezogene Linien dargestellt sind. Die Flussrichtung eines Stroms wird durch Pfeile angezeigt.

Synthesegas aus einem Wassergas-Shift-Reaktor (nicht gezeigt), welches als Hauptbestandteile Wasserstoff (H₂) und Kohlendioxid (CO₂) aufweist, wird über eine Leitung 30 bei einem Druck von 38 bar und einer Temperatur von etwa 40 °C herangeführt und zunächst im Wärmeaustauscher 20 gegen kaltes Synthesegas aus Leitung 32 auf eine Temperatur von etwa -10 °C abgekühlt. Das auf diese Temperatur abgekühlte Synthesegas wird über Leitung 31 weitergeführt und tritt anschließend in einem unteren Bereich in eine als Absorptionskolonne ausgestaltete Absorptionsvorrichtung 10 ein. Die Absorptionsvorrichtung 10 wird bei einem Absorptionsdruck von 38 bar betrieben und weist in Gasflussrichtung drei hintereinander geschaltete Absorptionsstufen 21, 22 und 23 auf. Das Synthesegas tritt zunächst in die erste Absorptionsstufe 21 ein. Die erste Absorptionsstufe 21 dient einer ersten Entfernung von Kohlendioxid aus dem Synthesegas, sowie der weiteren Kühlung des Synthesegases mit tiefkaltem Methanol. Dieses tritt aus der darüber angeordneten zweiten Absorptionsstufe über Leitung 17 in die erste Absorptionsstufe 21 ein und wird dabei in Leitung 17 durch einen Kältemittelverdampfer-Wärmetauscher 27 gekühlt. Das vorgereinigte Synthesegas passiert den Kaminboden 17 und tritt in die zweite Absorptionsstufe 22 ein, in welcher die Hauptmenge des Kohlendioxid aus dem Synthesegas entfernt wird. Die zweite Absorptionsstufe 22 wird mit einem tiefkalten Methanolstrom (Kühlvorrichtungen nicht gezeigt) aus Leitung 46 gespeist, welcher eine Kohlendioxid-Restbeladung von etwa 5 mol-% (Konzentration Kohlendioxid in Methanol) und eine Temperatur von etwa -39 °C aufweist. Zusätzlich kann die zweite Absorptionsstufe 22 (optional) mit einem tiefkalten Methanolstrom aus der dritten Absorptionsstufe 23 über Leitung 34 gespeist werden. Das weitgehend von Kohlendioxid befreite Synthesegas tritt anschließend durch den Kaminboden 18 in die dritte Absorptionsstufe 23 ein. Dort findet die Feinreinigung des Synthesegases statt, das heißt es wird von noch vorhandenen Restmengen an Kohlendioxid weitgehend, bis in den Spurenbereich, befreit. Die dritte Absorptionsstufe 23 wird mit tiefkaltem Methanol aus Leitung 45 gespeist (Kühlvorrichtungen nicht gezeigt), welches eine Kohlendioxid-Restbeladung von etwa 1 mol-% (Konzentration Kohlendioxid in Methanol) und eine Temperatur von etwa -48 °C aufweist.

Das praktisch vollständig von Kohlendioxid befreite Synthesegas, welches als verbleibende Hauptkomponente Wasserstoff aufweist, wird anschließend über die Leitung 32 aus der Absorptionsvorrichtung 10 abgezogen und beim Durchtritt durch den Wärmeaustauscher 20 aufgewärmt. Das aufgewärmte Synthesegas wird anschließend über Leitung 33 weitergeführt und kann beispielsweise als unbehandeltes Wasserstoffprodukt im Sinne eines kohlendioxidarmen Brennstoffs zum Heizen (sogenannter "*fuel grade*" Wasserstoff) genutzt werden. Ferner ist auch die Aufarbeitung in einem folgenden Reinigungsschritt möglich, beispielsweise mit Hilfe einer Wechseldruckadsorption (nicht gezeigt), um ein reines Wasserstoffprodukt zu erhalten.

Beladenes Methanol wird im Sumpfbereich der Absorptionsvorrichtung 10 über Leitung 36 aus dieser abgezogen und tritt nach Entspannung auf etwa 15 bar über Entspannungsventil 14 in eine Mitteldruck-Flash-Stufe 11 ein. Die Mitteldruck-Flash-Stufe 11 ist als Flash-Kolonne ausgestaltet und dient in erster Linie nicht zur Desorption von Kohlendioxid, sondern zur Desorption von in der Absorptionsvorrichtung 10 co-absorbierter Wertgase, insbesondere co-absorbierten Wasserstoffs. Der desorbierte Wasserstoff und gegebenenfalls weitere Gase wird über Leitung 37 aus der Mitteldruck-Flash-Stufe abgezogen und über einen Recyclegas-Kompressor 26 auf den Absorptionsdruck von 38 bar rückverdichtet. Der in der Mitteldruck-Flash-Stufe 11 desorbierte und verdichtete Wasserstoff wird anschließend dem Synthesegas-Hauptstrom in Leitung 30 zugeführt.

Das weiterhin mit der Hauptmenge Kohlendioxid beladene Methanol wird über Leitung 39 aus der Mitteldruck-Flash-Stufe abgezogen und tritt nach Entspannung auf etwa 1,5 bar über Entspannungsventil 15 in die Niederdruck-Flash-Stufe 12 ein, welche ebenfalls als Flash-Kolonne ausgestaltet ist. Durch die Drucksenkung auf 1,5 bar wird die Hauptmenge an Kohlendioxid aus dem Absorptionsmittel Methanol desorbiert. Das ausgetriebene Kohlendioxid wird über Leitung 42 aus der Niederdruck-Flash-Stufe 12 abgezogen. Durch die Senkung des Drucks auf ca. 1,5 bar weist das Absorptionsmittel (Methanol) noch eine Restbeladung von etwa 5 mol-% (Konzentration Kohlendioxid in Methanol) (Leitung 36) auf. Dieses teilregenerierte Methanol wird über Leitung 16 aus der Niederdruck-Flash-Stufe abgezogen und anschließend auf die Leitungen 41 und 40 aufgeteilt. Ein erster Teilstrom des teilregenerierten Methanols wird über die Leitungen 41 und 46 der zweiten Absorptionsstufe 22 zugeführt. Zwischen den Leitungen 41 und 46 ist eine Absorptionsmittelpumpe angeordnet, welche das teilregenerierte Methanol wieder auf den Absorptionsdruck von 38 bar verdichtet. Der verbleibende Teilstrom des teilregenerierten Methanols wird als zweiter Teilstrom über Leitung 40 der Unterdruck-Flash-Stufe 13 zugeführt, welche ebenfalls als Flash-Kolonne ausgestaltet ist. Der Anteil des ersten Teilstroms am Gesamtstrom im Kreislauf geförderten Methanols der Anlage beträgt etwa 30 %.

Die Unterdruck-Flash-Stufe 13 wird bei einem Druck von 0,2 bar betrieben. Dieses Vakuum wird durch einen Vakuum-Kompressor 25 erzeugt. Der Vakuum-Kompressor 25 ist zwischen den Leitungen 47 und 43 angeordnet. Entsprechend ist der Vakuum-Kompressor 25 saugseitig über Leitung 43 mit der Unterdruck-Flash-Stufe 13 verbunden. Durch das Anlegen von Unterdruck in der Unterdruck-Flash-Stufe 13 wird die Kohlendioxid-Konzentration im beladenen Methanol des zweiten Teilstroms weiter auf 1 mol-% (Konzentration Kohlendioxid in Methanol) gesenkt. Das dabei ausgetriebene Kohlendioxid zieht über Leitung 43 aus der Unterdruck-Flash-Stufe 13 ab und wird über den Vakuum-Kompressor 25 auf einen Druck von 1,5 bar verdichtet. Der Vakuum-Kompressor 25 ist druckseitig über Leitung 47 mit der Niederdruck-Flash-Stufe 12 verbunden, in welcher entsprechend ein Druck von 1,5 bar herrscht. Das in der Unterdruck-Flash-Stufe 13 ausgetriebene Kohlendioxid verlässt zusammen mit dem in der Niederdruck-Flash-Stufe 12 ausgetriebenen Kohlendioxid letztere über Leitung 42. Das so in Leitung 42 erzeugte Kohlendioxid-Produkt wird anschließend, gegebenenfalls nach einer weiteren Verdichtung, entweder einer Lagerung oder weiteren Verwendung zugeführt (nicht gezeigt).

Das durch Flashen bei Unterdruck weitgehend regenerierte Methanol (Beladung Kohlendioxid etwa 1 mol-% Kohlendioxid in Methanol) wird aus der Unterdruck-Flash-Stufe 13 über Leitung 44 abgezogen und mit Hilfe von Absorptionsmittelpumpe 24 auf den Absorptionsdruck von 38 bar rückverdichtet. Das verdichtete weitgehend regenerierte Methanol wird über Leitung 45 weitergeführt und tritt anschließend in die dritte Absorptionsstufe 23 der Absorptionsvorrichtung 10 ein, in welcher es zur Feinreinigung des aufsteigenden Synthesegasstroms wie vorgehend beschrieben verwendet wird.

Figur 2 zeigt ein Verfahren 200 als Vergleichsbeispiel ohne erfindungsgemäße Rückführung von teilregeneriertem Methanol aus der Niederdruck-Flash-Stufe 12. Mit anderen Worten, die Gesamtmenge des in der Unterdruck-Flash-Stufe 13 regenerierten Methanols wird zur Absorptionsvorrichtung 10 zurückgeführt. Da die zweite Absorptionsstufe 22 hier entsprechend nicht direkt mit teilregeneriertem Methanol aus der Niederdruck-Flash-Stufe 12 gespeist wird, ist die Speisung der zweiten Absorptionsstufe 22 mit teilbeladenem Methanol aus der dritten Absorptionsstufe 23 über Leitung 34 hier obligatorisch.

Die folgende Tabelle zeigt die Vorteile des erfindungsgemäßen Verfahrens und der erfindungsgemäßen Anlage mit erfindungsgemäßer Absorptionsmittelrückführung gemäß Schritt (e) oder Anlagenkomponente (e) anhand eines Zahlenbeispiels. Die gezeigten Werte basieren auf einer Simulation, welche mit Hilfe der Software Aspen Plus^{®} der Firma aspentech durchgeführt wurde.

| | | Figur 1, Verfahren 100 (Erfindung) | Figur 2, Verfahren 200 |
|---|---|---|---|
| Abgeschiedenes Kohlendioxid | % | 97,8 | 97,8 |
| Elektrische Leistung | MW | 6,8 | 8,1 |
| Leistung Kältemittelverdampfer | MW | 11,5 | 11,6 |
| Kühlwasser-Massenstrom | t/hr | 23,5 | 24,2 |
| Flussrate Leitung 44-45 | kmol/hr | 43613 | 58930 |
| Flussrate Leitung 41-46 | kmol/hr | 18691 | n/a |
| Leistung Vakuum-Kompressor | MW | 3,0 | 4,3 |

Im obigen Beispiel werden 18691 kmol/hr Absorptionsmittel aus der Niederdruck-Flash-Stufe 12 über die Leitungen 41 und 46 zur zweiten Absorptionsstufe 22 zurückgeführt. Dies entspricht einem Anteil von 30 % am Absorptionsmittelgesamtstrom. Wie aus der Tabelle ersichtlich, führt die erfindungsgemäße Absorptionsmittelrückführung (Figur 1, Verfahren 100) zu einer überraschend hohen Einsparung an der für das Verfahren erforderlichen elektrischen Leistung bei gleicher Menge an abgeschiedenem, das heißt zunächst absorbiertem und anschließend als Kohlendioxid-Produkt freigesetztem Kohlendioxid. Die Prozesseinsparungen an elektrischer Leistung beziffern sich auf 16 % gegenüber dem gleichen Verfahren ohne Absorptionsmittelrückführung (Figur 2, Verfahren 200). Zusätzlich und überraschenderweise wurde gefunden, dass die für die thermische Kühlung erforderliche Leistung um etwa 0,9 % zurückgeht. Dies erscheint auf den ersten Blick zunächst gering, ist jedoch signifikant in Bezug auf einen Prozess im industriellen Maßstab. Entsprechend ist ein geringerer Massenstrom an Kühlmittel zur Erreichung vergleichbar niedriger Temperaturniveaus in Bezug auf das Absorptionsmittel erforderlich. In Bezug auf den Gesamtprozess sinken die Betriebskosten (OPEX) des Verfahrens 100 gemäß Figur 1 um etwa 9 % gegenüber dem Verfahren 200 gemäß Figur 2 (nicht in der Tabelle gezeigt). Da die für den Vakuum-Kompressor 25 erforderliche Leistung im Falle des erfindungsgemäßen Beispiels etwa 30 % geringer ist, kann bei diesem Apparat auch eine Ersparnis bezüglich der Investitionskosten (CAPEX) realisiert werden.

### Bezugszeichenliste

- 100, 200: Verfahren
- 10: Absorptionsvorrichtung
- 11: Mitteldruck-Flash-Stufe
- 12: Niederdruck-Flash-Stufe
- 13: Unterdruck-Flash-Stufe
- 14, 15: Entspannungsventil
- 17: Erster Kaminboden
- 18: Zweiter Kaminboden
- 19: Kaminboden
- 20: Wärmeaustauscher
- 21: Erste Absorptionsstufe
- 22: Zweite Absorptionsstufe
- 23: Dritte Absorptionsstufe
- 24: Absorptionsmittelpumpe
- 25: Vakuum-Kompressor
- 26: Recyclegas-Kompressor
- 27: Kältemittelverdampfer-Wärmetauscher
- 28: Absorptionsmittelpumpe
- 16, 30-47: Leitung

## Patentansprüche

1. Verfahren zur Entfernung von Kohlendioxid (CO₂) aus Synthesegas, wobei das Synthesegas zumindest Wasserstoff (H₂) und Kohlendioxid (CO₂) aufweist, umfassend die Schritte
(a) Bereitstellen eines physikalisch wirkenden Absorptionsmittels, insbesondere Methanol;
(b) Zuführen des Synthesegases zu einer Absorptionsvorrichtung, und Entfernen von Kohlendioxid aus dem Synthesegas durch physikalische Absorption des Kohlendioxids im Absorptionsmittel bei Absorptionsdruck in der Absorptionsvorrichtung, wobei das Absorptionsmittel und das Synthesegas in der Absorptionsvorrichtung im Gegenstrom geführt werden, und wobei ein mit zumindest Kohlendioxid beladenes Absorptionsmittel und ein zumindest teilweise von Kohlendioxid befreites Synthesegas aus der Absorptionsvorrichtung abgezogen werden;
(c) Entfernen von Kohlendioxid aus dem aus der Absorptionsvorrichtung abgezogenen beladenen Absorptionsmittel durch Desorption des Kohlendioxids in einer Mehrzahl in Serie geschalteter Flash-Stufen durch Druckabsenkung gegenüber dem Absorptionsdruck, wobei der in einer Flash-Stufe vorherrschende Druck in Flussrichtung des Absorptionsmittels von Flash-Stufe zu Flash-Stufe vermindert wird;
(d) Abziehen eines zumindest teilregenerierten Absorptionsmittels aus der letzten der Mehrzahl in Serie geschalteter Flash-Stufen, Rückverdichten des zumindest teilregenerierten Absorptionsmittels auf Absorptionsdruck und Rückführen des zumindest teilregenerierten verdichteten Absorptionsmittels zur Verwendung als Absorptionsmittel in der Absorptionsvorrichtung gemäß Schritt (b);
(e) Abziehen eines teilregenerierten Absorptionsmittels aus einer Flash-Stufe, welche der letzten der Mehrzahl in Serie geschalteter Flash-Stufen vorgeschaltet ist, Rückverdichten des teilregenerierten Absorptionsmittels auf Absorptionsdruck und Rückführen des teilregenerierten verdichteten Absorptionsmittels zur Verwendung als Absorptionsmittels in der Absorptionsvorrichtung gemäß Schritt (b).

2. Verfahren nach Anspruch 1, **dadurch gekennzeichnet, dass** der Anteil des teilregenerierten Absorptionsmittels, welches gemäß Schritt (e) abgezogen und zu Schritt (b) zurückgeführt wird, 10 % bis 50 % der Gesamtmenge des im Verfahren verwendeten Absorptionsmittels beträgt, vorzugsweise 20 % bis 40 % der Gesamtmenge des im Verfahren verwendeten Absorptionsmittels beträgt.

3. Verfahren nach Anspruch 1 oder 2, **dadurch gekennzeichnet, dass** der in der letzten der Mehrzahl in Serie geschalteter Flash-Stufen vorherrschende Druck Unterdruck entspricht.

4. Verfahren nach einem der vorhergehenden Ansprüche, **dadurch gekennzeichnet, dass** in der letzten Flash-Stufe der Mehrzahl in Serie geschalteter Flash-Stufen desorbiertes Kohlendioxid aus besagter letzten Flash-Stufe abgezogen und auf denjenigen Druck verdichtet wird, welcher dem Druck derjenigen Flash-Stufe entspricht, welcher besagter letzten Flash-Stufe unmittelbar vorgeschaltet ist, und dass das aus der letzten Flash-Stufe abgezogene und verdichtete Kohlendioxid derjenigen Flash-Stufe zugeführt wird, welche besagter letzten Flash-Stufe unmittelbar vorgeschaltet ist.

5. Verfahren nach Anspruch 3 oder 4, **dadurch gekennzeichnet, dass** der vorherrschende Druck in derjenigen Flash-Stufe, welche der letzten Flash-Stufe unmittelbar vorgeschaltet ist, Umgebungsdruck oder einem Druck kleiner als dem Absorptionsdruck entspricht, und dass in besagter Flash-Stufe desorbiertes Kohlendioxid aus dieser Flash-Stufe abgezogen und als Kohlendioxid-Produkt einer weiteren Verwendung unterzogen wird.

6. Verfahren nach einem der vorhergehenden Ansprüche, **dadurch gekennzeichnet, dass** in der Absorptionsvorrichtung co-absorbiertes Wertgas, insbesondere Wasserstoff, in der ersten Flash-Stufe der Mehrzahl in Serie geschalteter Flash-Stufen desorbiert wird, und das Wertgas aus dieser ersten Flash-Stufe abgezogen und auf Absorptionsdruck rückverdichtet wird, und das rückverdichtete Wertgas dem Synthesegas zugeführt wird.

7. Verfahren nach einem der vorhergehenden Ansprüche, **dadurch gekennzeichnet, dass** die Mehrzahl in Serie geschalteter Flash-Stufen zumindest drei Flash-Stufen umfasst.

8. Verfahren nach einem der vorhergehenden Ansprüche, **dadurch gekennzeichnet, dass** die Absorptionsvorrichtung in Gasflussrichtung des Synthesegases eine Mehrzahl in Serie geschalteter Absorptionsstufen aufweist, wobei das gemäß Schritt (d) abgezogene zumindest teilregenerierte Absorptionsmittel einer der Absorptionsstufen zugeführt wird, und wobei das gemäß Schritt (e) abgezogene teilregenerierte Absorptionsmittel einer der vorgenannten Absorptionsstufe vorgeschalteten Absorptionsstufe zugeführt wird.

9. Verfahren nach Anspruch 7, **dadurch gekennzeichnet, dass** die Absorptionsstufe, welcher das aus Schritt (d) abgezogene zumindest teilregenerierte Absorptionsmittel zugeführt wird, die letzte Absorptionsstufe der in Serie geschalteten Absorptionsstufen der Absorptionsvorrichtung ist.

10. Verfahren nach einem der vorhergehenden Ansprüche, **dadurch gekennzeichnet, dass** das Verfahren keinen Heißregenerationsschritt zum Regenerieren des beladenen Absorptionsmittels umfasst.

11. Verfahren nach einem der vorhergehenden Ansprüche, **dadurch gekennzeichnet, dass** das Verfahren kein Stripphilfsmittel zum Regenerieren des beladenen Absorptionsmittels erfordert.

12. Anlage zur Entfernung von Kohlendioxid (CO₂) aus Synthesegas, wobei das Synthesegas zumindest Wasserstoff (H₂) und Kohlendioxid (CO₂) aufweist, umfassend folgende miteinander in Wirkverbindung stehende Anlagenkomponenten:
(a) Mittel zum Bereitstellen eines physikalisch wirkenden Absorptionsmittels, insbesondere Methanol;
(b) Eine Absorptionsvorrichtung, und Mittel zum Zuführen des Synthesegases zur Absorptionsvorrichtung, wobei die Absorptionsvorrichtung so konfiguriert ist, dass das Kohlendioxid aus dem Synthesegas durch physikalische Absorption im Absorptionsmittel bei Absorptionsdruck entfernbar ist, und die Absorptionsvorrichtung so konfiguriert ist, dass das Absorptionsmittel und das Synthesegas in der Absorptionsvorrichtung im Gegenstrom führbar sind, und wobei die Absorptionsvorrichtung weiterhin so konfiguriert ist, dass ein mit zumindest Kohlendioxid beladenes Absorptionsmittel und ein zumindest teilweise von Kohlendioxid befreites Synthesegas aus der Absorptionsvorrichtung abziehbar sind;
(c) Mittel zum Entfernen von Kohlendioxid aus dem aus der Absorptionsvorrichtung abziehbaren beladenen Absorptionsmittel durch Desorption, wobei die Mittel zumindest eine Mehrzahl in Serie geschalteter Flash-Stufen umfassen, wobei besagte Flash-Stufen so konfiguriert sind, dass in ihnen eine Druckabsenkung gegenüber Absorptionsdruck erfolgen kann, und die Flash-Stufen weiterhin so konfiguriert sind, dass der in einer Flash-Stufe vorherrschende Druck in Flussrichtung des Absorptionsmittels von Flash-Stufe zu Flash-Stufe abnehmen kann;
(d) Mittel zum Abziehen eines zumindest teilregenerierten Absorptionsmittels aus der letzten der Mehrzahl in Serie geschalteter Flash-Stufen, Mittel zum Rückverdichten des zumindest teilregenerierten Absorptionsmittels auf Absorptionsdruck, und Mittel zum Rückführen des zumindest teilregenerierten verdichteten Absorptionsmittel zur Verwendung als Absorptionsmittel in der Absorptionsvorrichtung gemäß (b);
(e) Mittel zum Abziehen eines teilregenerierten Absorptionsmittels aus einer Flash-Stufe, welche der letzten der Mehrzahl in Serie geschalteter Flash-Stufen vorgeschaltet ist, Mittel zum Rückverdichten des teilregenerierten Absorptionsmittels auf Absorptionsdruck, und Mittel zum Rückführen des teilregenerierten verdichteten Absorptionsmittels zur Verwendung als Absorptionsmittel in der Absorptionsvorrichtung gemäß (b).

13. Anlage nach Anspruch 12, **dadurch gekennzeichnet, dass** die Anlage Mittel zum Erzeugen von Unterdruck in der letzten der Mehrzahl in Serie geschalter Flash-Stufen umfasst.

14. Anlage nach Anspruch 12 oder 13, **dadurch gekennzeichnet, dass** die Anlage Mittel zum Abziehen und Verdichten von in der letzten Flash-Stufe der Mehrzahl in Serie geschalteter Flash-Stufen desorbierbarem Kohlendioxid umfasst, wobei die Mittel zum Verdichten so konfiguriert sind, dass der Druck auf den das desorbierbare Kohlendioxid verdichtbar ist, dem Druck derjenigen Flash-Stufe entspricht, welche besagter letzten Flash-Stufe unmittelbar vorgeschaltet ist, und wobei die Anlage Mittel zum Zuführen des aus der letzten Flash-Stufe abziehbaren und verdichtbaren Kohlendioxid zu derjenigen Flash-Stufe umfasst, welche der letzten Flash-Stufe der Mehrzahl in Serie geschalteter Flash-Stufen unmittelbar vorgeschaltet ist.

15. Anlage nach einem der Ansprüche 12 bis 14, **dadurch gekennzeichnet, dass** die Absorptionsvorrichtung in Gasflussrichtung des Synthesegases eine Mehrzahl in Serie geschalteter Absorptionsstufen aufweist, und wobei die Anlage Mittel umfasst, so dass das gemäß (d) abziehbare, zumindest teilregenerierte Absorptionsmittel einer der Absorptionsstufen zuführbar ist, und die Anlage Mittel umfasst so dass das gemäß Schritt (e) abziehbare, teilregenerierte Absorptionsmittel einer der vorgenannten Absorptionsstufe vorgeschalteten Absorptionsstufe zuführbar ist.

16. Anlage nach einem der Ansprüche 12 bis 15, **dadurch gekennzeichnet, dass** die Anlage keine Mittel zum Heißregenerieren des beladenen Absorptionsmittels umfasst.

17. Anlage nach einem der Ansprüche 12 bis 16, **dadurch gekennzeichnet, dass** die Anlage keine Mittel zum Bereitstellen eines Stripphilfsmittels zur Verwendung in den Flash-Stufen umfasst.

18. Verwendung des Verfahrens nach einem der Ansprüche 1 bis 11 oder der Anlage nach einem der Ansprüche 12 bis 17 zur Herstellung eines Wasserstoffprodukts zur Verwendung als Kraftstoff mit einem Wasserstoffgehalt von mindestens 95 mol-% und einem Kohlendioxid-Gehalt von weniger als 1 mol-%.
